Europäisches Patentamt

European Patent Office

Office européen des brevets

(11) Publication number: **0 087 352**
**B1**

(12) **EUROPEAN PATENT SPECIFICATION**

(45) Date of publication of patent specification: **30.01.85**

(51) Int. Cl.⁴: **C 04 B 14/40,** C 04 B 16/06

(21) Application number: **83400294.1**

(22) Date of filing: **11.02.83**

(54) **Process for preparing cement-asbestos based manufactured articles by using fibrils of synthetic polymers, endowed with a high superficial area, and products derived therefrom.**

(30) Priority: **15.02.82 IT 1965782**

(43) Date of publication of application:
**31.08.83 Bulletin 83/35**

(45) Publication of the grant of the patent:
**30.01.85 Bulletin 85/05**

(84) Designated Contracting States:
**BE DE FR GB**

(56) References cited:
**CA-A-1 093 729**
**FR-A-2 409 244**
**GB-A-1 327 792**

(73) Proprietor: **Montedison S.p.A.**
**31, Foro Buonaparte**
**I-20121 Milan (IT)**

(72) Inventor: **Ciaccia, Vittorio**
**126 Via Borgoleoni**
**Ferrara (IT)**
Inventor: **Credali, Lino**
**22 Via Calari**
**Casalecchio Di Reno (IT)**

(74) Representative: **Hirsch, Marc-Roger**
**34 rue de Bassano**
**F-75008 Paris (FR)**

Courier Press, Leamington Spa, England.

**0 087 352**

## Description

The present invention concerns composition and manufactured articles based on mixes of cement and asbestos fibres, containing fibrils of synthetic polymers of high superficial area.

It is well known to admix to cement mixes asbestos fibres, in general in a ratio of 20% by weight, in order to increase the mechanical resistance properties of the resulting manufactured articles. It is also known to use, for this purpose, different types of asbestos, both of the "chrysotile" as well as of the "amphibole" type, in admixture with each other, in the formulations of mixes intended for the preparation of manufactured products according to continuous wet processes which require filtering and dewatering (dehydration) operations on said mixes and/or the processing of said mixes in a machine for the production of formed bodies, for which a certain plasticity in the wet of the mixes themselves is required.

Processes of this type are, for instance, the HATSCHEK process and those derived from this process, such as for instance the MAZZA process and the semi-wet MAGNANI process, as well as the MANVILLE extrusion process.

According to the HATSCHEK process, a cement/asbestos fibre suspension in water in a 60% ratio of solids, is continuously filtered through a cylindrical screen or riddle. The different layers on the cylinder are transferred by a porous collecting belt to a calender on which they are deposited one after the other until the desired thickness is achieved; whereupon they are cut to size and conveyed to a platform for further processing.

A description of the HATSCHEK process is given, for instance, in: "Technical Report No. 1 (51.067)" — July, 1973, pages 18—19.

In the MAZZA process, which serves for producing cement-asbestos pressure-tubes, the layers freed of the water in excess, are transferred onto a rotary or revolving mandrel (spindle) instead of onto a platform, and are then compacted by pressure.

According to the MAGNANI process, a solid to water ratio of about 0.5, is used, while the mix is heated and then pumped onto a belt where it is levelled off by special rollers.

Both the rollers and the belt may be shaped in such a way as to form undulated (corrugated) or profiled plates, while vacuum tanks, arranged underneath the belt, will suck off the water in excess.

Lastly, by the MANVILLE process, a mix of cement, silicon and plasticizer was fed into a mixer containing water in sufficient quantity to produce a thick (rigid) mix. This latter is then forced through a slot or aperture in order to yield extruded products having the desired profile.

The admixture of such types of asbestos, besides improving the mechanical characteristics of the manufactured articles to which substantially contributes the asbestos of the chrysotile class, also has the purpose of increasing the freeness or filtrability as well as the plasticity under humidity of the mixes, which characteristics are substantially increased by the presence of amosite asbestos. This latter is generally admixted to the mixes in quantities not exceeding 2% by weight of the weight of the dry cement. The amosite belongs to the family of amphiboles and displays a chemical composition and physical characteristics that differ quite consistently from the other types of asbestos, its chemical composition being: $(OH)_2\text{-}(Fe, Ca, Mg)_7(Si, Al)_8O_{22}$.

The amosite is one of the most noxious components for the human organism, in the asbestos mixes used as fillers in the cements, and thus tends to be used in the lowest possible quantities or even totally eliminated.

It has now been found by this Applicant that it is possible to conveniently replace in the amosite-containing cement/asbestos mixes, this amosite with fibrils or fibrids of olefinic polymers having a superficial area of at least 1 $m^2$/gram.

In fact, it has been established that it is sufficient to replace the quantity of amosite generally used and which amounts to about 2% on the weight of the cement, with a quantity not exceeding 0.5% by weight of the cement, of such fibrils, in order to obtain mixes displaying at least equal characteristics of freeness and filtrability, plasticity under humidity and processability on forming machines, without any appreciable prejudice to the mechanical characteristics of the manufactured articles themselves, and therefore it is conveniently usable in the above described process.

One of the objects of the present invention is, thus, to provide a process for the preparation of manufactured articles based on cement/asbestos mixes, by means of the preparation operations consisting in suspending the cement and the asbestos fibres in water, filtering said suspension and optional dewatering of the mix obtained, and forming and manufactured article with said mix, characterized in that said suspension is free of asbestos of the amosite type, and is additioned with up to 0.5% by weight, of the weight of the dry cement, of fibrils or fibrids of at least one olefinic polymer having a superficial area of at least 1 $m^2$/gram.

A further purpose of the present invention is to manufacture articles based on cement/asbestos fibres, free of amosite-type asbestos, and containing quantities of olefinic polymer fibrils with a superficial area of 1 $m^2$/g, forming 0.5% by weight of the weight of the dry cement, as obtained by said process.

Fibrils or fibrids of the above mentioned type are already known as partial or total substituents of

2

the cellulosic fibres in the preparation of paper and other similar products. Their preparation may be carried out following various different methods, such as, for instance, described:
— in Belgian Patents nos. 868 651 — 891 943 — 891 945 — 1 265 531 and 1 287 917;
— in U.S. Patents nos. 3 770 856 — 3 740 383 — 3 808 091;
— in German Pat. Appl. nos. 2 208 553 and 2 234 343;
— in French Patent no. 2 176 858;
— in Belgian Pat. no. 789 807; and
— in Italian Patents nos. 947 919 and 1 030 809, filed in the name of the present Applicant.

Said fibrils or fibrids in general have a length comprised from 1 to 10 mm and a mean diameter (apparent diameter) comprised from 1 to 500 microns.

For the purposes of the present invention, fibrils of a mean diameter comprised from 2 to 30 microns, but preferably comprised from 5 to 20 microns, are preferably used having a length of from 0.5 to 3 mm, but still more preferred are those comprised from 1 to 2 mm.

Said fibrils preferably contain incorporated inorganic charges or fillers, such as kaolin, talc, carbonates of alkaline-earth metals, silica, silicates, diatomite (Kieselgur), clays, in quantities up to 40% by weight of the total weight of the fibres, but preferably comprised from 15% to 25% by weight.

Quantities of such fibrils of 0.1% by weight of the cement, have already been found to be quite effective as substituents of amosite in the process of this invention and in the products derived therefrom.

In order to improve the dispersability in aqueous cement mixes, the fibrils may be treated before use with various types of wetting agents, according to already known methods, for instance described in the U.S. Patents nos. 3 743 570 and 4 002 796, this latter filed in the name of the Applicant, and Belgian Pat. No. 848 093.

As olefinic polymers forming the fibrils or fibrids to be used for the purposes of the present invention, there may be specifically cited the low-density and high-density polyethylenes, polypropylene prevailingly consisting of isotactic macromolecules, polybutene-1, poly-4-methyl-1-pentène, and ethylene/propylene copolymers.

As cement to be used for the purpose of the present invention, besides Portland cement, any other hydraulic binder reinforceable with asbestos, such as, for instance, aluminous cement, pozzolanic cement, and blast-furnace cement may be used.

The following examples are given by way of non-limitative illustration without in any way departing from the spirit of the invention itself.

## Example 1 (comparative)

Into a vertical, conically shaped mixer, was introduced a mix consisting of:

| | |
|---|---|
| — Portland cement 325 | 800 kg |
| — Water | 15 cm³ |
| — Mixture of chrysotile asbestos, free of amosite, and of the 4-Canadian, 5-Italian and 3-Rhodesian kind, in a weight ratio of 2:2:1, preliminarly processed in a mixer for 5 minutes, in the presence of 20% moisture | 96 kg |

This mix was then homogenized for 10 minutes, then conveyed to a bucket elevator and diluted with water until a concentration of 20 g/litre was reached. The suspension thus obtained was thereupon pumped into HATSCHEK-type forming cases of a forming machine working with 3 VÖITH-type forming drums, and from which were obtained 6.5 mm thick plates, under the following operatonal conditions:

| | | |
|---|---|---|
| — number of revolutions of forming drum | 6 | |
| — maximum forming speed of plate | 38 | m/min |
| — pressure exerted on forming cylinder | 3.5 | bars |
| — measure of the vacuum necessary for the sucking off of the water from the mix until a water content of 30% is obtained | 20 | cm/Hg |

Characteristics of the plates thus obtained, after drying and conditioning in air having a relative humidity of 90%, for 28 days.

| | | |
|---|---|---|
| — density of the plate | 1.63 | |
| — flexural resistance (on specimen of 1.5 × 10 × 0.65 cm) | 225 | bars |
| — deformation (camber) | 0.8 | mm |

3

**0 087 352**

### Example 2 (comparative)

Operating proceeded as in Example 1, but with the difference that the asbestos mix consisted in 88% of the above mentioned chrysotiles in a 2:2:1 ratio, and in 12% of amosite (corresponding to about 1.5% by weight of amosite of the cement present).

The operational conditions for preparing the plates were, furthermore, the followings:

| | |
|---|---|
| — number of revolutions of forming drum | 6 |
| — maximum plate-forming speed | 48  m/min |
| — pressure exerted on forming cylinder | 3.5  bars |
| — pressure value of vacuum required for reducing the mix to a water content of 30% | 30%  40 cm/Hg |

Characteristics of the plate (having a thickness of $\neq$ 6.5 mm):

| | |
|---|---|
| — density | 1.65 |
| — flexural resistance | 216,8 bars |
| — deformation (camber) | 0.7  mm |

### Example 3

Operating proceeded as in Example 2, but with the difference that the mix of asbestos did not include amosite and that it consisted in 96% of chrysotiles, as hereinabove described, and in 4% of fibrils of polyethylene (corresponding to 0.4% by weight of the cement), having a length comprised from 1.6 to 1.8 mm, a diameter of about $15\mu$ and a surface area of 5 m²/g and further incorporated in 15% by weight of kaolin in the form of a powder. Said fibrils showed a refining degree (°SR) comprised between 12 and 14.

The operational conditions of the plate-forming were analogous to those used in Example 2.

The plate thus obtained was 6.5 mm thick, and showed a density of 1.64, a flexural resistance equal to 225 bars² and  a camber or deformation value of 0.7 mm.

### Example 4 (comparative)

Operating proceeded as in Example 3, but with the difference that the polyethylene fibrils were replaced with an equal quantity by weight of amosite.

The operational conditions were, furthermore, as follows:

| | | |
|---|---|---|
| — number of revolutions of forming drum | 6 | |
| — maximum plate-forming speed | 41 | m/min |
| — pressure exerted on forming cylinder | 3.5 | bars |
| — amount of vacuum required for reducing the water content of the mix to 30% | 26 | cm/Hg |

Characteristics of the plate obtained:

| | | |
|---|---|---|
| — thickness | 6.5 | mm |
| — density | 1.66 | g/cm³ |
| — flexural resistance | 230 | bars |
| — deformation (camber) | 0.8 | mm |

### Claims

1. Process for the preparation of manufactured articles based on mixes of cement with asbestos fibres, said process consisting in operations for preparing an aqueous suspension of cement and asbestos fibres, then filtering said suspension, possibly dehydrating the mix thus obtained and formation of the manufactured article, characterized in that said suspension is free of asbestos fibres of the amosite type, and that it is additioned with up to 0.5% by weight with respect to the weight of the dry cement, of fibrils of at least one olefinic polymer and having a superficial area of at least 1 m²/gram.

4

2. Process according to claim 1, characterized in that said fibrils contain up to 40% by weight of a mineral filler or an inorganic filler.

3. Manufactured articles based on mixes of cement and asbestos fibres, but free asbestos of the amosite type, said manufactured articles containing up to 0.5% by weight of the weight of the dry cement, of fibrils of at least one olefinic polymer, having a superficial area of at least 1 m²/g, and obtainable by the process as claimed in preceding claims 1 and 2.

## Patentanspruche

1. Verfahren zur Herstellung von Manufakturerzeugnissen auf der Basis von Gemischen aus Zement und Asbestfasern, bei dem eine wässerige Suspension von Zement und Asbestfasern bereitet, sodann die Suspension filtriert, ggf. das so erhaltene Gemisch dehydriert und das Manufakturerzeugnis bildet wird, dadurch gekennzeichnet, dass die Suspension frei von Asbestfasern des Amosit-Typs ist, und dass man ihr, bezogen auf des Gewicht des trockenen Zements, bis zu 0,5% Gewichtsprozent aus wenigstens einem Olefinpolymers bestehende Fasern mit einer spezifischen Oberfläche von wenigstens 1m²/g zusetzt.

2. Verfahren nach Anspruch 1, dadurch gekennzeichnet, dass die Fasern bis zu 40 Gewichtsprozent eines mineralischen Füllmittels oder anorganischen Füllmittels enthalten.

3. Manufakturerzeugnisse auf der Basis von Gemischen aus Zement und Asbestfasern, jedoch ohne Asbest des Amosit-Typs, wobei die Manufakturerzeugnisse, bezogen auf das Gewicht des trockenen Zements, bis zu 0,5% Gewichtsprozent aus wenigstens einem Olefinpolymer bestehende Fasern enthalten, die eine spezifische Oberfläche von wenigstens 1m²/g besitzen und durch das in den vorstehenden Ansprüchen 1 und 2 beanspruchte Verfahren herstellbar sind.

## Revendications

1. Procédé de préparation d'article manufacturés à base de mélanges de ciment avec des fibres d'amiante, ce procédé consistant en des opérations de préparation d'une suspension aqueuse de ciment et de fibres d'amiante, en la filtration ensuite de ladite suspension, en l'éventuelle déshydratation du mélange ainsi obtenu et en la formation de l'article manufacturé, caractérisé en ce que ladite suspension est exempte de fibres d'amiante de type amosite, et en ce qu'elle est additionnée de jusqu'à 0,5% en poids, par rapport au poids du ciment sec, de fibrilles d'au moins un polymère oléfinique et dont l'aire superficielle est d'au moins 1 m²/g.

2. Procédé selon la revendication 1, caractérisé en ce que lesdites fibrilles contiennent jusqu'à 40% en poids d'une charge minérale ou d'une charge inorganique.

3. Articles façonnés à base de mélanges de ciment et de fibres d'amiante, mais exempt d'amiante de type amosite, ces articles façonnés contenant jusqu'à 0,5% en poids, exprimé par rapport au poids de ciment sec, de fibrilles d'au moins un polymère oléfinique, ayant une aire superficielle d'au moins 1 m²/g, et susceptible d'être obtenu par le procédé aussi que revendiqué dans les revendications 1 et 2 ci-dessus.